# EUROPÄISCHE PATENTSCHRIFT

(11) **EP 2 863 500 B1**
(45) Veröffentlichungstag und Bekanntmachung des Hinweises auf die Patenterteilung: **31.03.2021**
(21) Anmeldenummer: 14188855.2
(22) Anmeldetag: 14.10.2014
(51) Int. Cl.: H02G 3/22, H02G 3/04

(54) **Brandschutzvorrichtung**
Fire protection device
Dispositif pare-feu

(30) Priorität: 15.10.2013 DE 102013111371
(43) Veröffentlichungstag der Anmeldung: 22.04.2015
(73) Patentinhaber: Celsion Brandschutzsysteme GmbH, 02627 Radibor (DE)
(72) Erfinder: Schubert, Boris, 02627 Radibor (DE)
(74) Vertreter: Lippert Stachow Patentanwälte Rechtsanwälte Partnerschaft mbB

(56) Entgegenhaltungen:
- EP-A2- 1 429 436
- EP-A2- 2 061 126
- DE-A1-102004 033 536
- DE-A1-102007 000 040
- DE-T2- 69 201 040
- DE-T2-602005 002 240
- DE-U1- 20 020 471
- DE-U1-202006 004 488
- US-A- 4 189 619
- US-A- 4 276 332

## Beschreibung

Die Erfindung betrifft eine Brandschutzvorrichtung.

Allgemein umfassen die Aufgaben des Brandschutzes u. a. die Vorbeugung der Entstehung von Gefahren durch Brände, die Vermeidung der Brandausbreitung, das frühzeitige Erkennen von Bränden, die Vermeidung der Ausbreitung von Rauch und Giftstoffen sowie eine effektive Brandbekämpfung. Zur Umsetzung dieser Aufgaben wird zwischen Maßnahmen bestreffend den baulichen Brandschutz, den anlagentechnischen Brandschutz, den organisatorischen Brandschutz und den abwehrenden Brandschutz unterschieden. Die vorliegende Erfindung betrifft den Bereich des baulichen Brandschutzes, der u. a. die Brandverhütung durch bauliche Maßnahmen und die Brandabschnittsbildung durch bauliche Maßnahmen und Abschottungen zur Aufgabe hat.

Gebäude werden in mehrere Brandabschnitte, d. h. Bereiche, die von benachbarten Brandabschnitten so getrennt sind, dass eine Brand- und Rauchausbreitung auf andere Brandabschnitte nicht oder erst nach einer bestimmten Branddauer möglich ist, eingeteilt. Die Trennung kann beispielsweise durch Einhaltung von Schutzabständen, geeignete Bauteile oder brandschutztechnische Einrichtungen erfolgen.

Unter Brand wird dabei ein mit einer Lichterscheinung (Feuer, Flamme, Glut, Glimmen, Funken) und/oder der Entwicklung von heißem Rauch verbundener Verbrennungs- oder Sengvorgang, der ohne einen bestimmungsgemäßen Herd entstanden ist oder ihn unkontrolliert verlassen hat, um sich aus eigener Kraft unkontrolliert auszubreiten, verstanden.

Sicherheitsrelevante Anlagen, wie z. B. Brandmeldeanlagen, Wasserdruckerhöhungsanlagen zur Löschwasserversorgung, maschinelle Rauchabzugsanlagen, Sicherheitsbeleuchtungsanlagen oder Feuerwehraufzüge müssen im Brandfall besonders geschützt werden, um ihren Funktionserhalt für eine vorgeschriebene Zeitdauer zu erhalten. Üblicherweise werden sie daher in einem eigenen Brandabschnitt gemäß geltender Normen und Richtlinien, wie beispielsweise der deutschen Muster-Leitungsanlagen-Richtlinie vom 17.11.2005 (MLAR 2005) sowie der internationalen Norm IEC 60364-5-56, beispielsweise in einem eigenen, für andere Zwecke nicht genutzten Raum oder einem speziellen Brandschutzgehäuse untergebracht. Auf europäischer Ebene ist derzeit für die Leistungs- und Produkterklärung von Bauprodukten, so auch für Brandschutzabschottungen, die EU-Verordnung Nr. 305/2011 vom 9. März 2011 zur Festlegung harmonisierter Bedingungen für die Vermarktung von Bauprodukten zu beachten.

Es sei darauf hingewiesen, dass alle hier angegebenen Normen den gegenwärtigen Stand darstellen. Da sich die Normen zukünftig sowohl inhaltlich als auch hinsichtlich ihrer Zuordnung zu bestimmten Richtlinien, Gesetzen etc. ändern können, soll sich die Erfindung, soweit in der Beschreibung angeführt, gleichfalls auf diejenigen geänderten Normen beziehen, deren Inhalt weiterhin für die hier in Frage stehenden Anforderungen an die beanspruchte Brandschutzvorrichtung zutreffend sind und den angegebenen Normen weitgehend entsprechen.

Häufig ist es jedoch notwendig, Anlagen, insbesondere Leitungsanlagen über mehrere Brandabschnitte hinweg auszuführen. Nachfolgend, und gemäß MLAR 2005, sind Leitungsanlagen Anlagen aus Leitungen, insbesondere aus elektrischen Leitungen oder Rohrleitungen, sowie aus den zugehörigen Armaturen, Hausanschlusseinrichtungen, Messeinrichtungen, Steuer-, Regel- und Sicherheitseinrichtungen, Netzgeräten, Verteilern und Dämmstoffen für die Leitungen. Zu den Leitungen gehören deren Befestigungen und Beschichtungen. Lichtwellenleiter-Kabel und elektrische Kabel gelten als elektrische Leitungen.

Die notwendigen Öffnungen in Form von Durchführungen zwischen zwei Brandabschnitten müssen für einen effektiven Brandschutz so ausgeführt werden, dass die erforderliche Feuerwiderstandsfähigkeit erhalten bleibt. Dazu werden die Durchführungen mit speziellen Verschlüssen versehen, die als Brandschott oder Brandabschottung bezeichnet werden.

Unter Brandabschottungen versteht der Fachmann allgemein solche technischen Maßnahmen, mit denen Wand- und Deckendurchbrüche für haustechnische Installationsleitungen wie Rohr- und Kabelführungen derart verschlossen werden, dass Feuer und Rauch sich nicht aufgrund dieser Durchbrüche von einem auf den benachbarten Brandabschnitt ausbreiten können.

So sind Kabelabschottungen Verschlüsse von Öffnungen für die Durchführung von elektrischen Leitungen, insbesondere von Kabeln und Leitungen mit metallischen Leitern, Stromschienen, Leitungen mit nichtmetallischen Leitern, z. B. Lichtwellenleiter, in solchen raumabschließenden Bauteilen, an die Anforderungen hinsichtlich der Feuerwiderstandsdauer gestellt werden, wobei im Gebrauchszustand in der Kabelabschottung keine unverschlossenen durchgehenden Öffnungen, insbesondere zur Vermeidung der Kaltrauchausbreitung, vorhanden sein dürfen. Die Anforderungen an solche Kabelabschottungen sind beispielsweise in der deutschen DIN 4102-9 oder in der europäischen Norm EN 1366-3 beschrieben und beispielsweise aus der DE 200 20 471 U1 oder EP 2 061 126 A2 bekannt.

Weiterhin werden in der DIN EN 13501-2 und entsprechenden nationalen Vorschriften Feuerwiderstandsklassen definiert, denen eine bestimmte bauaufsichtliche Benennung entspricht. So sichert die Feuerwiderstandsklasse EI 30 einen über 30 min wirkenden Feuerschutz zu und wird als feuerhemmend bezeichnet. Entsprechend garantiert EI 60 einen Feuerschutz über 60 min (hochfeuerhemmend), EI 90 über 90 min (feuerbeständig) und EI 120 über 120 min (feuerwiderstandsfähig). Ein Funktionserhalt einer Anlage, für den der Feuerwiderstand nur eine Voraussetzung darstellt, wird durch Versuche im Sinne der einschlägigen Normen und Richtlinien nachgewiesen.

Um einen ausreichenden Schutz vor den Auswirkungen eines Brandes zu erzielen, sind aus dem Stand der Technik Bauteile bekannt, deren Wandung aus z. B. feuerhemmender Konstruktion eine Beschichtung aufweist, die bei Überschreiten einer bestimmten Temperatur aufschäumen und dadurch zum einen eine Abdichtung gegenüber Rauch und der Brandausbreitung gewährleisten und zum anderen wärmeisolierend wirken. Beispielsweise beschreibt die DE 10 2005 041 522 B4 eine Farbe mit einem Schaumrohstoff, welcher bei Temperaturen ab 100 °C aufquillt.

Trotz einer geeigneten Brandabschottung stellen die über mehrere Brandabschnitte hinweg führenden Leitungsanlagen Schwachstellen aus brandschutztechnischer Sicht dar. So führt der Wärmeeintrag in die Leitungsanlage in einem Brandabschnitt zu einer Wärmeübertragung in einen über die Leitungsanlage verbundenen weiteren Brandabschnitt. Dies kann insbesondere für den Fall, dass der weitere Brandabschnitt geringe Dimensionen aufweist, z. B. lediglich ein Brandschutzgehäuse darstellt, zu einer starken Temperaturerhöhung in diesem Brandabschnitt und den damit verbundenen negativen Effekten, wie z. B. der Beschädigung von Computern und anderen wärmeempfindlichen Geräten und Bauteilen, bis zum Funktionsausfall führen.

Zudem führt der Eintrag von Wärmeenergie im Falle von elektrischen Leitungen zu einer unerwünschten Widerstandserhöhung und einer damit verringerten Stromstärke, so dass die zuverlässige Stromversorgung der angeschlossenen Anlagen und somit deren Funktionsfähigkeit nicht mehr gewährleistet sind.

Um die Ausbreitung eines Brandes und von Rauch durch die Brandabschottung einer Leitungsdurchführung zu verhindern, ist es bisher üblich, diese Bereiche komplett zu ummanteln, zu umkoffern oder zu umbauen, z. B. indem die durchgeführten Leitungen mit einem Spezialmörtel umgeben werden. Werden nach der Erstinstallation Änderungen notwendig, z. B. eine Nachbelegung mit weiteren Leitungen oder ein Leitungsaustausch, so muss der Durchführungsbereich aufwändig freigelegt und nach erfolgter Änderung fachkundig neu aufgebaut werden, was aber häufig bereits aus Platzgründen nur schwer realisierbar ist und regelmäßig zu einer Schwächung des Schutzes der Brandschutzsysteme führt Weiterer Stand der Technik befindet sich z.B. in US 4 189 619 A und in DE 60 2005 002240 T2.

Aufgabe der Erfindung ist es daher, eine Vorrichtung anzugeben, die den Eintrag von Wärmeenergie in eine Leitungsanlage und damit die Wärmeübertragung in benachbarte Brandabschnitte im Brandfall verringert, insbesondere um die Funktion von sicherheitsrelevanten Anlagen zu erhalten. Zudem soll eine gute Zugänglichkeit der Brandabschottung in Leitungsdurchführungen gewährleistet werden, so dass eine Nachrüstung mit weiteren Leitungen ohne Schwächung der Brandschutzfunktionalität möglich ist.

Zur Lösung der Aufgabenstellung wird eine Brandschutzvorrichtung mit den Merkmalen des Anspruchs 1 angegeben. Die darauf bezogenen Unteransprüche beinhalten bevorzugte Ausgestaltungen der erfindungsgemäßen Lösung.

Die erfindungsgemäße Brandschutzvorrichtung umfasst zumindest eine Brandabschottung, welche eine Kabelabschottung ist, und einen Kanal zur Aufnahme von durch die Kabelabschottung geführten Leitungen im Anschluss an die Kabelabschottung, welche auch als Brandschutzeinrichtungen bezeichnet sind. Nachfolgend wird die Kabelabschottung auch allgemein als Brandabschottung bezeichnet.

Allgemein werden unter Brandschutzeinrichtungen solche Einrichtungen verstanden, die dem anlagentechnischen, baulichen oder betrieblichen Brandschutz dienen, wie z. B. geeignete Fernmeldeanlagen, Brandbekämpfungseinrichtungen, Rauch- und Wärmeabzugsanlagen oder Kühleinrichtungen. Weitere Brandschutzeinrichtungen können beispielsweise Brandschutzgehäuse, insbesondere für Elektroverteiler, Brandmeldeanlagen oder Sicherheitsbeleuchtungsanlagen, oder Brandschutztrennwände, welche wiederum eine Brandabschottung aufweisen, sein.

Aufgrund der erfindungsgemäßen Verknüpfung des Kanals mit der Brandabschottung kann der verbesserte Schutz der Leitungen auf die zu schützenden Anlagen in einer sich anschließenden Brandschutzeinrichtung ausgedehnt werden.

Unter Kanal wird dabei ein länglicher Körper verstanden, dessen Kanalwandung einen Querschnitt definiert und den Kanal zumindest über einen Teil des Querschnitts begrenzt, so dass der Kanal offen oder bei vollumfänglicher Begrenzung geschlossen ist. Die Länge des Kanals ist in der Regel wesentlich größer als sein Durchmesser. Den Kanalquerschnitt bildet ein n-Eck mit 3 ≤ n < ∞ oder ein Oval, d. h. es sind beispielsweise dreieckige oder kreisrunde Querschnitte möglich. Bevorzugt ist häufig ein viereckiger, insbesondere ein rechteckiger Querschnitt. In diesem Fall besitzt der Kanal x = 4 Längsseiten, d. h. Begrenzungsflächen, die sich in Längsrichtung des Kanals erstrecken, und von denen bei einem offenen Kanal zwei, meist jedoch drei mit Kanalwandungen und bei einem geschlossenen Kanal alle vier mit Kanalwandungen ausgebildet sind. Als Innenraum des Kanals wird der Raum definiert, welcher von der Kanalwandung gebildet wird. Im Innenraum werden die Leitungen aufgenommen.

Unter dem Begriff Leitungen sollen Kabel, Rohre und sonstige Leitungen, insbesondere elektrische Leitungen verstanden werden. Der Kanal ist im Anschluss an die Brandabschottung angeordnet. Er kann entweder direkt an die Brandabschottung anschließen oder mit der Brandabschottung so verbunden sein, dass beide spätestens im Brandfall über die aufgeschäumte Beschichtung rauchdicht im Sinne der EN 1643-3 (Norm für Rauchschutztüren) und unter Einhaltung einer bestimmten Feuerwiderstandsklasse miteinander verbunden sind. Die Erfindung betrifft daher die Kombination beider Komponenten, Brandabschottung und Verkleidung einer Leitungsanlage, die je eigene Zulassungsbereiche gemäß der jeweils gültigen Brandschutzverordnung darstellen können.

Die Innenseite der Kanalwandung weist zumindest teilweise eine selbständig aufschäumbare Beschichtung auf. Diese Beschichtung schäumt beim Über- oder Unterschreiten eines vorgebbaren Schwellwerts ohne weitere Einflussnahme auf, sodass der Kanal zumindest soweit ausfüllbar ist, dass die Leitungen zumindest angrenzend zur Brandschutzabschottung vollständig durch die aufgeschäumte Beschichtung umhüllt sind.

Das die Brandschutzfunktion ausübende Mittel ist somit nicht wie üblich an den Leitungen, sondern in Form der Beschichtung an der Kanalwandung angeordnet. Dies ermöglicht im Unterschied zum Stand der Technik eine einfache Zugänglichkeit zu den Leitungen und ebenso zur Brandabschottung, so dass Revisionen, Wartungen oder Änderungen am Kanal, an den Leitungen oder der Brandabschottung einfach möglich sind, ohne in den Brandschutz der Leitungsanlagen einzugreifen oder ihn gar zu schwächen. Die erfindungsgemäße Brandschutzvorrichtung ermöglicht auch die offene Verlegung von Leitungen bis an die Brandabschottung heran. Eine Verkleidung der Leitungen beispielsweise in einer abgehängten Decke oder durch einen Kanalverschluss ist aus Brandschutzgründen nicht erforderlich.

Die Beschichtung ist intumeszierend und bildet im aufgeschäumten Zustand einen mikroporösen Schaum. Derartige Beschichtungen, beispielsweise auf Blähgraphit oder Phosphorbasis, sind aus verschiedenen Brandschutzeinrichtungen bekannt und werden z. B. in Form von Brandschutzplatten unter dem Namen Palusol® vertrieben. Das Aufschäumen der Beschichtung wird durch das Über- oder Unterschreiten eines vorgebbaren Schwellwertes, in der Regel das Überschreiten einer bestimmten Temperatur, ausgelöst. Denkbar sind jedoch auch andere Schwellwerte, wie z. B. die Luftfeuchtigkeit, eine bestimmte Gas- oder Ionenkonzentration oder der Eintrag einer bestimmten elektrischen Energie. Die Beschichtung wird dazu vor dem Aufbringen auf den Kanal auf den gewünschten Schwellwert eingestellt, sodass eine zusätzliche Mess- und Regelungseinrichtung zwar grundsätzlich möglich, aber nicht notwendig ist, womit die Zuverlässigkeit der Vorrichtung verbessert werden kann.

Die Beschichtung ist aufgrund ihrer Anordnung auf den Innenseiten der Kanalwandung so aufgebaut, dass sie sich bei einem Brandherd in der Umgebung der Leitungen während des Aufschäumvorgangs bevorzugt in Richtung der Leitungen ausbreitet, und so ein schnelles, vollständiges Umhüllen der Leitungen ermöglicht. Die vollständige Umhüllung der Leitungen mit dem Schaum der Beschichtung angrenzend zur benachbarten Brandabschottung gewährleistet die positiven Effekte des erfindungsgemäßen Kanals.

Der erfindungsgemäße Kanal verringert den Eintrag von Wärmeenergie in eine Leitungsanlage im Brandfall, da die Leitungen der Leitungsanlage in einem Kanal angeordnet sind, welcher eine erste Barriere für eine Temperaturübertragung vom Brandherd, für den Fall, dass dieser außerhalb des Kanals lokalisiert ist, auf die Leitungsanlage darstellt. Des Weiteren verringert die aufschäumende Beschichtung aufgrund ihrer isolierenden Wirkung den Wärmeenergieeintrag.

Selbstverständlich wirkt die aufschäumbare Beschichtung des erfindungsgemäßen Kanals auch bei einem innerhalb der Leitungsanlage auftretenden Brand, z. B. für den Fall, dass die Isolierung von elektrischen Leitungen aufgrund von Überhitzung in Brand gerät.

Mit dem Schutz der Leitungen vor Feuer, Rauch und heißen Brandgasen wird einerseits eine Wärmeübertragung in einen benachbarten Brandabschnitt im Brandfall mittels der Leitungen durch die Brandabschottung hindurch verringert. Andererseits wird im Falle von elektrischen Leitungen eine durch erhöhte Temperatur hervorgerufene Widerstandserhöhung weitgehend vermieden, so dass die Funktionsfähigkeit der mit Strom versorgten Einrichtungen und Anlagen über einen längeren Zeitraum erhalten wird.

Da die Beschichtung erst bei Über- oder Unterschreiten eines vorgebbaren Schwellwertes aufschäumt, ist im Normalzustand ohne Brand eine größtmögliche Zugänglichkeit der Leitungen und der sich an den Kanal anschließenden Brandabschottung sowie des Durchführungsbereichs gewährleistet.

Zudem wird eine Wärmeübertragung mittels der Leitungen im Normalzustand nicht verhindert, so dass beispielsweise für den Fall, dass die Leitungsanlage mit einer elektrotechnischen Einrichtung verbunden ist, welche aufgrund ihrer Verlustleistung sich selbst und den sie umgebenden Raum aufheizt, eine gewisse Kühlung über die Leitungsanlage möglich ist.

Die Brandabschottung der erfindungsgemäßen Brandschutzvorrichtung umfasst im Bereich der Leitungsdurchführung einen rauchdichten, zumindest feuerhemmenden Schaumstoff, durch welchen die Leitungen geführt sind. Der Schaumstoff weist elastische Eigenschaften auf, d. h. er verändert unter Krafteinwirkung seine Form, ist jedoch bestrebt, bei Wegfall der einwirkenden Kraft in die Ursprungsform zurückzukehren. Dadurch ist es beispielsweise möglich, Leitungen unter Krafteinwirkung durch den Schaumstoff hindurch zu führen, die dann vom Schaumstoff rauchdicht umschlossen werden. Der Schaumstoff kann beispielsweise aus Silikonschaum bestehen.

Der Schaumstoff ist zumindest in dem Bereich angeordnet, in dem die Leitungen durch die Durchführung verlaufen. Er kann jedoch auch die komplette Brandabschottung bilden.

Durch den Schaumstoff werden die Leitungen geführt, so dass die Zugänglichkeit und insbesondere die Nachrüstbarkeit mit weiteren Leitungen auch durch die Brandabschottung unterstützt werden. Auf diese Weise kann eine Leitung leicht aus dem Schaumstoff entfernt, wobei der Schaumstoff bestrebt ist, die entstehende Öffnung wieder zu verschließen, oder neue Durchgänge hergestellt werden.

Die erleichterte Belegung der Brandabschottung mit Leitungen ermöglicht in Verbindung mit der leichten oder offenen Zugänglichkeit des sich daran anschließenden Kanals die eigenständige und feuerschutzgerechte Nachbelegung auch durch Personen, die nur geringe Kenntnisse im brandschutztechnischen Bereich besitzen.

Zudem wird eine Staub- und Schmutzentwicklung bei der Nachbelegung vermieden, was insbesondere für Brandschutzeinrichtungen in entsprechend sensiblen Bereichen, wie z. B. im IT- oder Forschungsbereich, unerwünscht ist und aufgrund des geringeren Reinigungsaufwands zu einer Vermeidung von Zusatzkosten beiträgt.

Zudem umfasst der Schaumstoff Schläuche zur Aufnahme der Leitungen. Die Schläuche sind in jedem Fall rauchdicht. D. h., im belegten Zustand umfassen sie die hindurchführenden Leitungen rauchdicht und im unbelegten Zustand sind die Schläuche aufgrund ihrer elastischen Eigenschaften sowie der abdichtenden Wirkung des Schaumstoffs rauchdicht. Eine Ausbreitung von Rauch sowie eine Brandausbreitung in einen benachbarten Brandabschnitt werden daher weitgehend vermieden.

Die Schläuche bestehen bevorzugt aus einem flexiblen und elastischen, beispielsweise textilen Material, dass sich an den Durchmesser und die Form der Leitungen anpasst. Weiter bevorzugt sind die Schläuche aus einem zumindest feuerhemmenden Material, beispielsweise Glasfaser oder geeigneter Baumwolle, ausgeführt.

Die Schläuche verlaufen durch den Schaumstoff der Brandabschottung, bevorzugt auf kürzestem Weg, hindurch. Die beiden Enden eines Schlauches befinden sich entsprechend in unterschiedlichen Brandabschnitten. Bevorzugt enden die Schläuche nicht bündig mit dem Schaumstoff, sondern ragen weiter in den jeweiligen Brandabschnitt hinein. Optional enden die Schläuche im Kanal.

Die Schläuche dienen der Aufnahme von Leitungen und vereinfachen die Nachbelegung erheblich, da die dafür notwendigen Durchgänge durch den Schaumstoff bereits bei Erstinstallation geschaffen werden und die Nachbelegung in der Regel durch einfaches Durchschieben der Leitungen ohne zusätzliches Werkzeug erfolgt.

In einer Ausführungsvariante ist der Kanal so gestaltet, dass die Beschichtung bei Überschreiten einer vorgebbaren Temperatur selbständig aufschäumt. Da ein Brand zwangsläufig mit einer Temperaturerhöhung einhergeht, ist die Temperatur als Schwellwert besonders gut geeignet, dass Aufschäumen auszulösen und dadurch die Brandschutzfunktion mit hoher Zuverlässigkeit zu erfüllen.

Sofern entsprechend einer Ausgestaltung der Erfindung der Kanal als offener Kanal ausgebildet ist, ist der Zugang frei, ohne Verminderung des Schutzes der Leitungen im Brandfall. Außerdem wirkt die Wärme im Brandfall eher auf die Beschichtung ein und es wird ein rechtzeitiges Aufschäumen ermöglicht. Da die Beschichtung bevorzugt in Richtung der Wärmequelle, d. h. in Richtung des Brandherds aufschäumt, wird die offene Seite des Kanals bevorzugt verschlossen.

Weiter bevorzugt ist der Kanal vollständig ausfüllbar. Somit kann eine bestmögliche Umhüllung der Leitungen und damit eine maximale Wärmeisolierung und ein bestmöglicher Schutz der Leitungen realisiert werden. Zudem unterstützt die vollständige Ausfüllung mit Schaum die mechanische Stabilität des Kanals im Brandfall.

Gemäß einer bevorzugten Ausführungsform besteht die Wandung des Kanals aus einem Material, welches den brandschutztechnischen Anforderungen für den betreffenden Abschnitt entspricht, beispielsweise aus feuerhemmendem oder aus hochfeuerhemmendem, oder aus feuerbeständigem Material. Geeigneten Materialien sind beispielsweise Kalziumsilikatplatten oder Zementplatten.

In einer weiteren Ausführungsvariante weist die Beschichtung Partikel auf, die mittels endothermer Reaktion ihrer Umgebung Energie entziehen können. Im Brandfall handelt es sich dabei vordergründig um Wärmeenergie, d. h. die Partikel haben eine kühlende Wirkung und unterstützen dadurch die Brandschutzwirkung der Beschichtung. Die Partikel sind so ausgeführt, dass die endotherme Reaktion erst bei einer Temperatur startet, bei der die Beschichtung bereits aufgeschäumt ist.

Gemäß einer Ausführungsvariante weisen die Schläuche zumindest teilweise eine bei Über- oder Unterschreiten eines vorgebbaren Schwellwertes selbständig aufschäumbare Beschichtung auf. Die Beschichtung kann sowohl einseitig als auch beidseitig, d. h. auf der Innen- und Außenseite der Schläuche aufgebracht sein und den Schlauch teilweise oder vollständig bedecken. Insbesondere ist die Beschichtung im Kontaktbereich mit dem Schaumstoff aufgebracht. Die Beschichtung ist intumeszierend und bildet im aufgeschäumten Zustand einen mikroporösen Schaum.

Das Aufschäumen der Beschichtung wird durch das Über- oder Unterschreiten eines vorgebbaren Schwellwertes, in der Regel das Überschreiten einer bestimmten Temperatur, ausgelöst. Denkbar sind jedoch auch andere Schwellwerte, wie z. B. die Luftfeuchtigkeit oder eine bestimmte Gas- oder Ionenkonzentration. Die Beschichtung wird dazu vor dem Aufbringen auf den Schlauch auf den gewünschten Schwellwert eingestellt, sodass eine zusätzliche Mess- und Regelungseinrichtung zwar grundsätzlich möglich, aber nicht notwendig ist, womit die Zuverlässigkeit der Vorrichtung verbessert werden kann.

Die aufschäumbare Beschichtung trägt zu einer weiteren Abdichtung im Brandfall gegen Rauch- und Brandausbreitung und damit auch gegen Wärmeausbreitung in benachbarte Brandabschnitte bei.

In einer weiteren Ausführungsform umfasst die Brandschutzvorrichtung weiterhin ein Brandschutzgehäuse. Üblicherweise umfasst ein Brandschutzgehäuse eine untere Bodenwand, drei Seitenwände, eine obere Deckenwand, eine Tür sowie eine Durchführung, durch die Leitungen, insbesondere elektrische Leitungen, in das Brandschutzgehäuse geführt werden können. Die Durchführung ist regelmäßig mit einer Brandabschottung versehen, an die sich ein Kanal anschließt. Brandabschottung und Kanal sind wie zuvor beschrieben in erfindungsgemäßer Weise ausgebildet.

Die Erfindung soll nachfolgend anhand eines Ausführungsbeispiels erläutert werden. In den zugehörigen Zeichnungen zeigen:

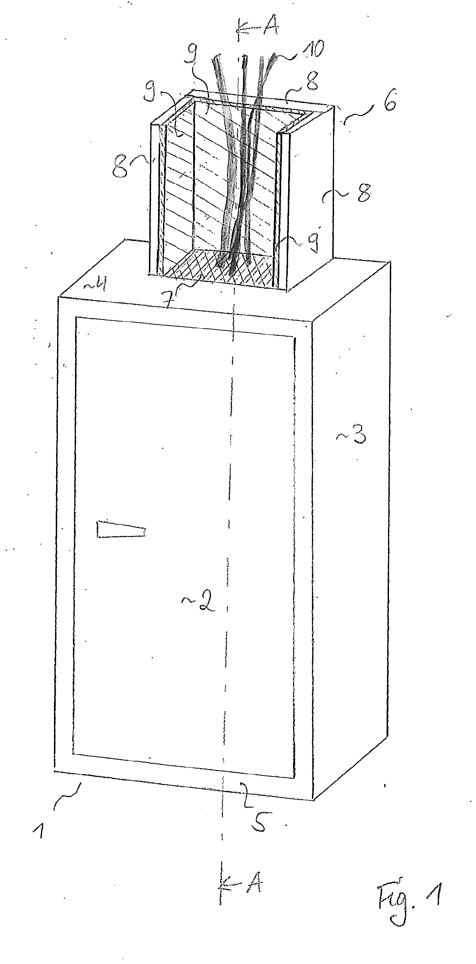

- Fig. 1: eine erfindungsgemäße Brandschutzvorrichtung in perspektivischer Darstellung,

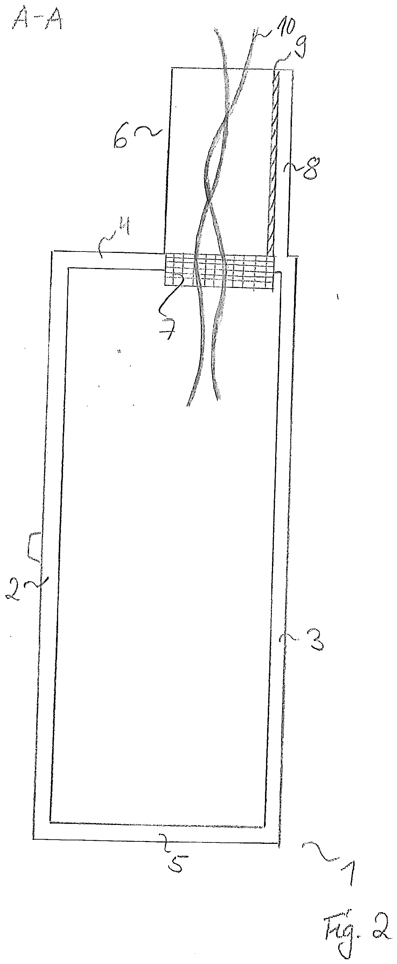

- Fig. 2: eine erfindungsgemäße Brandschutzvorrichtung in Schnittdarstellung.

Gemäß einem Ausführungsbeispiel umfasst die erfindungsgemäße Brandschutzvorrichtung 1 ein Brandschutzgehäuse und eine Brandabschottung 7 sowie einen Kanal 6, der an die Brandabschottung 7 anschließt. Das Brandschutzgehäuse besteht beispielsweise aus feuerhemmendem Material mit einer unteren Bodenwand 5, drei Seitenwänden 3, einer Tür 2 sowie einer oberen Deckenwand 4. In der oberen Deckenwand 4 befindet sich in einer Durchführung die Brandabschottung 7, die aus einem feuerhemmenden, elastischen Schaummaterial, im Ausführungsbeispiel beispielhaft, aber nicht beschränkend, aus Silikonschaum, besteht.

Durch die Brandabschottung 7 sind Leitungen 10 geführt, bei denen es sich im Beispiel um elektrische Leitungen handelt. Direkt auf dem Brandschutzgehäuse ist im Bereich der Brandabschottung 7 ein Kanal 6 aufgesetzt. Der Kanal 6 besitzt eine rechteckige Querschnittsfläche und ist an seiner vorderen, breiteren Längsseite offen. Die Kanalwandung 8 umgibt den Bereich der Brandabschottung 7 und besteht aus Kalziumsilikatplatten als feuerhemmendem Material. Die rechteckige, vorn offene Gestaltung des Kanals gewährleistet eine gute Zugänglichkeit des Kanals, der Leitungen und der Brandschutzabschottung.

Die Innenseite der Kanalwandung 8 ist vollständig mit einer Beschichtung 9 versehen. Diese Beschichtung 9 schäumt bei Überschreiten der zu erwartenden Brandtemperatur, im Ausführungsbeispiel beispielhaft, aber nicht beschränkend bei einer Temperatur von ca. 140 °C, selbständig unter vollständiger Ausfüllung des Kanals 6 auf, so dass auch die innerhalb des Kanals 10 liegenden Abschnitte der Leitungen 10 eine vollständige Umhüllung durch die aufgeschäumte Beschichtung aufweisen. Außerdem stellt die aufgeschäumte Beschichtung 8 eine rauchdichte Verbindung von Kanal 6 und Brandschutzgehäuse 2 sicher.

### Bezugszeichenliste

- 1: Brandschutzvorrichtung
- 2: Tür
- 3: Seitenwand
- 4: obere Deckenwand
- 5: untere Bodenwand
- 6: Kanal
- 7: Brandabschottung, Kabelabschottung
- 8: Kanalwandung
- 9: Beschichtung
- 10: Leitung

## Patentansprüche

1. Brandschutzvorrichtung (1) mit
- einer Leitungsdurchführung durch welche Leitungen führbar sind,
- zumindest einer Brandabschottung (7), welche eine Kabelabschottung (7) ist,
- wobei die Kabelabschottung (7) im Bereich der Leitungsdurchführung einen zumindest feuerhemmenden Schaumstoff umfasst, durch welchen die Leitungen (10) führbar sind und
- einem Kanal (6) zur Aufnahme von durch die Kabelabschottung (7) geführten Leitungen (10),
- wobei der Kanal im Anschluss an die Kabelabschottung (7) angeordnet ist, und
- wobei die Kanalwandung (8) des Kanals (6) aus zumindest feuerhemmendem Material besteht,
- der Schaumstoff elastisch und rauchdicht ist, **dadurch gekennzeichnet, dass**
- der Schaumstoff elastische Schläuche zur Aufnahme der Leitungen (10) und zur Nachbelegung von Leitungen (10) umfasst, die dazu eingerichtet sind hindurch führende Leitungen rauchdicht zu umschließen und im unbelegten Zustand rauchdicht sind und
- die Innenseite der Kanalwandung (8) zumindest teilweise eine Beschichtung (9) aufweist, so dass im Fall des Aufschäumens der Kanal (6) zumindest soweit ausfüllbar ist, dass die Leitungen (10) zumindest angrenzend zur Kabelabschottung (7) eine vollständige Umhüllung durch die aufgeschäumte Beschichtung (9) aufweisen,
- wobei die Beschichtung eine bei Über- oder Unterschreiten eines vorgebbaren Schwellwertes selbständig aufschäumbare Beschichtung ist.

2. Brandschutzvorrichtung nach Anspruch 1, **dadurch gekennzeichnet, dass** der Kanal als länglicher Körper ausgebildet ist, dessen Kanalwandung einen Querschnitt definiert und den Kanal zumindest über einen Teil des Querschnitts begrenzt, so dass der Kanal offen oder bei vollumfänglicher Begrenzung geschlossen ist.

3. Brandschutzvorrichtung nach Anspruch 1 oder 2, **dadurch gekennzeichnet, dass** die Beschichtung (9) bei Überschreiten einer vorgebbaren Temperatur selbständig aufschäumbar ist.

4. Brandschutzvorrichtung nach einem der vorstehenden Ansprüche, **dadurch gekennzeichnet, dass** der Kanal (6) vollständig ausfüllbar ist.

5. Brandschutzvorrichtung nach einem der vorstehenden Ansprüche, **dadurch gekennzeichnet, dass** die Beschichtung (9) Partikel aufweist, die mittels endothermer Reaktion ihrer Umgebung Energie entziehen können.

6. Brandschutzvorrichtung nach einem der vorstehenden Ansprüche, **dadurch gekennzeichnet, dass** die Schläuche zumindest teilweise eine bei Über- oder Unterschreiten eines vorgebbaren Schwellwertes selbständig aufschäumbare Beschichtung aufweisen.

7. Brandschutzvorrichtung nach einem der vorstehenden Ansprüche, **dadurch gekennzeichnet, dass** die Schläuche im Kanal (6) enden.

8. Brandschutzvorrichtung nach einem der vorstehenden Ansprüche, **dadurch gekennzeichnet, dass** die Brandschutzvorrichtung (1) weiterhin ein Brandschutzgehäuse umfasst.

## Revendications

1. Dispositif pare-feu (1) muni
- d'un passage de conduites au travers duquel des conduites peuvent être acheminées,
- d'au moins un cloisonnement pare-feu (7), qui est un cloisonnement de câbles (7),
- le cloisonnement de câbles (7) comprenant dans la zone du passage de conduites une mousse au moins ignifuge, au travers de laquelle les conduites (10) peuvent être acheminées, et
- d'un canal (6) pour la réception de conduites (10) acheminées au travers du cloisonnement de câbles (7),
- le canal étant agencé à la suite du cloisonnement de câbles (7), et
- la paroi de canal (8) du canal (6) étant constituée d'un matériau au moins ignifuge,
- la mousse étant élastique et étanche à la fumée, **caractérisé en ce que**
- la mousse comprend des tuyaux élastiques pour la réception des conduites (10) et pour la réinsertion de conduites (10), qui sont conçus pour entourer de manière étanche à la fumée des conduites acheminées au travers de ceux-ci et sont étanches à la fumée à l'état non occupé, et
- le côté intérieur de la paroi de canal (8) comprend au moins partiellement un revêtement (9), de telle sorte qu'en cas de moussage, le canal (6) puisse être rempli au moins dans une mesure telle que les conduites (10) présentent, au moins en position adjacente au cloisonnement de câbles (7), un enrobage complet par le revêtement moussé (9),
- le revêtement étant un revêtement moussable de manière autonome lors d'un dépassement ou sous-dépassement d'une valeur de seuil prédéfinissable.

2. Dispositif pare-feu selon la revendication 1, **caractérisé en ce que** le canal est configuré sous la forme d'un corps allongé, dont la paroi de canal définit une section transversale et délimite le canal au moins sur une partie de la section transversale, de telle sorte que le canal soit ouvert ou, en cas de délimitation intégrale, fermé.

3. Dispositif pare-feu selon la revendication 1 ou 2, **caractérisé en ce que** le revêtement (9) est moussable de manière autonome en cas de dépassement d'une température prédéfinissable.

4. Dispositif pare-feu selon l'une quelconque des revendications précédentes, **caractérisé en ce que** le canal (6) est entièrement remplissable.

5. Dispositif pare-feu selon l'une quelconque des revendications précédentes, **caractérisé en ce que** le revêtement (9) comprend des particules qui peuvent extraire de l'énergie de leur environnement au moyen d'une réaction endothermique.

6. Dispositif pare-feu selon l'une quelconque des revendications précédentes, **caractérisé en ce que** les tuyaux comprennent au moins partiellement un revêtement moussable de manière autonome en cas de dépassement ou sous-dépassement d'une valeur de seuil prédéfinissable.

7. Dispositif pare-feu selon l'une quelconque des revendications précédentes, **caractérisé en ce que** les tuyaux finissent dans le canal (6).

8. Dispositif pare-feu selon l'une quelconque des revendications précédentes, **caractérisé en ce que** le dispositif pare-feu (1) comprend en outre un boîtier pare-feu.

## Claims

1. Fire protection device (1) having
- a line leadthrough through which lines can be routed,
- at least one fire partition (7), which is a cable partition (7),
- wherein the cable partition (7) comprises, in the region of the line leadthrough, an at least fire-retardant foam through which the lines (10) can be routed, and
- a duct (6) for receiving lines (10) routed through the cable partition (7),
- wherein the duct is arranged adjoining the cable partition (7), and
- wherein the duct wall (8) of the duct (6) consists of at least fire-retardant material,
- the foam is elastic and smokeproof, **characterized in that**
- the foam comprises elastic tubes for receiving the lines (10) and for the subsequent occupancy of lines (10), said tubes being designed to enclose routed-through lines in a smokeproof manner and being smokeproof in the unoccupied state, and
- the inner side of the duct wall (8) has at least in part a coating (9) such that, in the event of foaming, the duct (6) can be filled at least to such an extent that the lines (10) are, at least adjacent to the cable partition (7), completely encased by the foamed coating (9),
- wherein the coating is a coating which is automatically foamable if a predeterminable threshold value is exceeded or fallen below.

2. Fire protection device according to Claim 1, **characterized in that** the duct is designed as an elongate body whose duct wall defines a cross section and bounds the duct at least over part of the cross section, with the result that the duct is open or, if fully circumferentially bounded, closed.

3. Fire protection device according to Claim 1 or 2, **characterized in that** the coating (9) is automatically foamable if a predeterminable temperature is exceeded.

4. Fire protection device according to one of the preceding claims, **characterized in that** the duct (6) can be completely filled.

5. Fire protection device according to one of the preceding claims, **characterized in that** the coating (9) contains particles which can remove energy from their surroundings by means of endothermic reaction.

6. Fire protection device according to one of the preceding claims, **characterized in that** the tubes have at least in part a coating which is automatically foamable if a predeterminable threshold value is exceeded or fallen below.

7. Fire protection device according to one of the preceding claims, **characterized in that** the tubes end in the duct (6).

8. Fire protection device according to one of the preceding claims, **characterized in that** the fire protection device (1) further comprises a fire protection housing.
